# EUROPÄISCHE PATENTSCHRIFT

(11) **EP 1 239 957 B1**
(45) Veröffentlichungstag und Bekanntmachung des Hinweises auf die Patenterteilung: **06.04.2005**
(21) Anmeldenummer: 00974461.6
(22) Anmeldetag: 26.10.2000
(51) Int. Cl.: B01J 27/26, B01J 31/06, C08G 65/10

(54) **DOPPELMETALLCYANID-KATALYSATOREN FÜR DIE HERSTELLUNG VON POLYETHERPOLYOLEN**
DOUBLE METAL CYANIDE CATALYSTS FOR PRODUCING POLYETHER POLYOLS
CATALYSEURS A CYANURE METALLIQUE DOUBLE POUR LA PRODUCTION DE POLYOLS DE POLYETHER

(30) Priorität: 08.11.1999 DE 19953546
(43) Veröffentlichungstag der Anmeldung: 18.09.2002
(60) Teilanmeldung: 04005548.5
(73) Patentinhaber: Bayer MaterialScience AG, 51368 Leverkusen (DE)
(72) Erfinder: OOMS, Pieter, 47800 Krefeld (DE); HOFMANN, Jörg, 47829 Krefeld (DE); STEINLEIN, Christian, 40882 Ratingen (DE); EHLERS, Stephan, 50937 Köln (DE)
(86) Internationale Anmeldenummer: PCT/EP2000/010550
(87) Internationale Veröffentlichungsnummer: WO 2001/034297

(56) Entgegenhaltungen:
- EP-A- 1 038 900
- WO-A-00/15337
- WO-A-00/47649
- WO-A-00/47650
- WO-A-98/16310
- WO-A-99/19063

## Beschreibung

Die Erfindung betrifft neue Doppelmetallcyanid (DMC)-Katalysatoren für die Herstellung von Polyetherpolyolen durch Polyaddition von Alkylenoxiden an aktive Wasserstoffatome aufweisende Starterverbindungen.

Doppelmetallcyanid (DMC)-Katalysatoren für die Polyaddition von Alkylenoxiden an aktive Wasserstoffatome aufweisende Starterverbindungen sind bekannt (siehe z.B. US-A 3 404 109, US-A 3 829 505, US-A 3 941 849 und US-A 5 158 922). Der Einsatz dieser DMC-Katalysatoren für die Herstellung von Polyetherpolyolen bewirkt insbesondere eine Reduzierung des Anteils an monofunktionellen Polyethern mit endständigen Doppelbindungen, sogenannten Monoolen, im Vergleich zu der konventionellen Herstellung von Polyetherpolyolen mittels Alkali-Katalysatoren, wie Alkalihydroxiden. Die so erhaltenen Polyetherpolyole können zu hochwertigen Polyurethanen (z.B. Elastomere, Schäume, Beschichtungen) verarbeitet werden. DMC-Katalysatoren werden gewöhnlich erhalten, indem man eine wässrige Lösung eines Metallsalzes mit der wässrigen Lösung eines Metallcyanidsalzes in Gegenwart eines organischen Komplexliganden, z.B. eines Ethers, umsetzt. In einer typischen Katalysatorpräparation werden beispielsweise wässrige Lösungen von Zinkchlorid (im Überschuss) und Kaliumhexacyanocobaltat gemischt und anschließend Dimethoxyethan (Glyme) zur gebildeten Suspension gegeben. Nach Filtration und Waschen des Katalysators mit wässriger Glyme-Lösung wird ein aktiver Katalysator der allgemeinen Formel

Zn₃[Co(CN)₆]₂ xZnCl₂ yH₂O zGlyme

erhalten (siehe z.B. EP-A 700 949).

Aus JP-A 4 145 123, US-A 5 470 813, EP-A 700 949, EP-A 743 093, EP-A 761 708 und WO 97/40086 sind DMC-Katalysatoren bekannt, die durch Einsatz von tert.-Butanol als organischem Komplexliganden (allein oder in Kombination mit einem Polyether (EP-A 700 949, EP-A 761 708, WO 97/40086)) den Anteil an monofunktionellen Polyethern mit endständigen Doppelbindungen bei der Herstellung von Polyetherpolyolen weiter reduzieren. Darüber hinaus wird durch den Einsatz dieser DMC-Katalysatoren die Induktionszeit bei der Polyadditionsreaktion der Alkylenoxide mit entsprechenden Starterverbindungen reduziert und die Katalysatoraktivität erhöht.

Aufgabe der vorliegenden Erfindung war es, weiter verbesserte DMC-Katalysatoren für die Polyaddition von Alkylenoxiden an entsprechende Starterverbindungen zur Verfügung zu stellen, die eine im Hinblick auf die bislang bekannten Katalysatortypen erhöhte Katalysatoraktivität aufweisen. Dies führt durch Verkürzung der Alkoxylierungszeiten zu einer verbesserten Wirtschaftlichkeit des Herstellprozesses von Polyetherpolyolen. Idealerweise kann durch die erhöhte Aktivität der Katalysator dann in so geringen Konzentrationen (25 ppm oder weniger) eingesetzt werden, dass die sehr aufwendige Katalysatorabtrennung aus dem Produkt nicht mehr notwendig ist, und das Produkt direkt zur Polyurethan-Herstellung verwendet werden kann.

Überraschend wurde jetzt gefunden, dass DMC-Katalysatoren, die drei oder mehrere unterschiedliche komplexbildende Komponenten enthalten, bei der Polyetherpolyol-Herstellung stark erhöhte Aktivität besitzen in Vergleich mit Katalysatoren, die nur eine komplexbildende Komponente enthalten.

Gegenstand der vorliegenden Erfindung ist daher ein Doppelmetallcyanid (DMC)-Katalysator, enthaltend
a) eine oder mehrere, vorzugsweise eine Doppelmetallcyanid-Verbindung,
b) einen oder mehrere, vorzugsweise einen, von c) verschiedenen organischen Komplexliganden, und
c) einem oder mehrere Polyester und eine oder mehrere

In dem erfindungsgemäßen Katalysator können gegebenenfalls d) Wasser, vorzugsweise 1 bis 10 Gew.-% und/oder e) eines oder mehrere wasserlösliche Metallsalze, vorzugsweise 5 bis 25 Gew.-%, der Formel (I) M(X)ₙ aus der Herstellung der Doppelmetallcyanidverbindungen a) enthalten sein. In Formel (I) wird M ausgewählt aus den Metallen Zn (II), Fe (II), Ni (II), Mn (II), Co (II), Sn (II), Pb (II), Fe (III), Mo (IV), Mo (VI), Al (III), V (V), V (IV), Sr (II), W (IV), W (VI), Cu (II) und Cr (III). Besonders bevorzugt sind Zn (II), Fe (II), Co (II) und Ni (II). X sind gleich oder verschieden, vorzugsweise gleich und ein Anion, bevorzugt ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Der Wert für n ist 1, 2 oder 3.

Die in den erfindungsgemäßen Katalysatoren enthaltenen Doppelmetallcyanid-Verbindungen a) sind die Reaktionsprodukte wasserlöslicher Metallsalze und wasserlöslicher Metallcyanidsalze.

Zur Herstellung von Doppelmetallcyanid-Verbindungen a) geeignete wasserlösliche Metallsalze besitzen bevorzugt die allgemeine Formel (I) M(X)ₙ, wobei M ausgewählt wird aus den Metallen Zn (II), Fe (II), Ni (II), Mn (II), Co (II), Sn (II), Pb (II), Fe (III), Mo (IV), Mo (VI), A1 (III), V (V), V (IV), Sr (II), W (IV), W (VI), Cu (II) und Cr (III). Besonders bevorzugt sind Zn (II), Fe (II), Co (II) und Ni (II). Die Anionen X sind gleich oder verschieden, vorzugsweise gleich und werden bevorzugt ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Der Wert für n ist 1, 2 oder 3.

Beispiele geeigneter wasserlöslicher Metallsalze sind Zinkchlorid, Zinkbromid, Zinkacetat, Zinkacetylacetonat, Zinkbenzoat, Zinknitrat, Eisen(II)sulfat, Eisen(II)-bromid, Eisen(II)chlorid, Cobalt(II)chlorid, Cobalt(II)thiocyanat, Nickel(II)chlorid und Nickel(II)nitrat. Es können auch Mischungen verschiedener wasserlöslicher Metallsalze eingesetzt werden.

Zur Herstellung von Doppelmetallcyanid-Verbindungen a) geeignete wasserlösliche Metallcyanidsalze besitzen bevorzugt die allgemeine Formel (II) (Y)ₐ M'(CN)_{b} (A)_{c}, wobei M' ausgewählt wird aus den Metallen Fe(II), Fe(III), Co(II), Co(III), Cr(II), Cr(III), Mn(II), Mn(III), Ir(III), Ni(II), Rh(III), Ru(II), V(IV) und V(V). Besonders bevorzugt wird M' ausgewählt aus den Metallen Co(II), Co(III), Fe(II), Fe(III), Cr(III), Ir(III) und Ni(II). Das wasserlösliche Metallcyanidsalz kann eines oder mehrere dieser Metalle enthalten. Die Kationen Y sind gleich oder verschieden, vorzugsweise gleich, und werden ausgewählt aus der Alkalimetallionen und Erdalkalimetallionen umfassenden Gruppe. Die Anionen A sind gleich oder verschieden, vorzugsweise gleich, und werden ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Sowohl a als auch b und c sind ganzzahlig, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0. Beispiele geeigneter wasserlöslicher Metallcyanidsalze sind Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Bevorzugte Doppelmetallcyanid-Verbindungen a), die in den erfindungsgemäßen Katalysatoren enthalten sind, sind Verbindungen der allgemeinen Formel (III)

Mₓ[M'ₓ,(CN)_{y}]_{z},

worin
M wie in Formel (I) und
M' wie in Formel (II) definiert ist, und
x, x', y und z ganzzahlig und so gewählt sind, dass die Elektroneutralität der Doppelmetallcyanidverbindung gegeben ist.

Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US-A 5 158 922 zu entnehmen. Besonders bevorzugt verwendet wird Zinkhexacyanocobaltat(III).

Die in den erfindungsgemäßen DMC-Katalysatoren enthaltenen organischen Komplexliganden b) sind im Prinzip bekannt und ausführlich im Stand der Technik beschrieben (beispielsweise in US-A 5 158 922, US-A 3 404 109, US-A 3 829 505, US-A 3 941 849, EP-A 700 949, EP-A 761 708, JP-A 4 145 123, US-A 5 470 813, EP-A 743 093 und WO 97/40086). Bevorzugte organische Komplexliganden sind wasserlösliche, organische Verbindungen mit Heteroatomen, wie Sauerstoff, Stickstoff, Phosphor oder Schwefel, die mit der Doppelmetallcyanid-Verbindung a) Komplexe bilden können. Geeignete organische Komplexliganden sind z.B. Alkohole, Aldehyde, Ketone, Ether, Ester, Amide, Harnstoffe, Nitrile, Sulfide und deren Mi-. schungen. Bevorzugte organische Komplexliganden sind wasserlösliche aliphatische Alkohole, wie Ethanol, Isopropanol, n-Butanol, iso-Butanol, sek.-Butanol und tert.-Butanol. Besonders bevorzugt ist tert.-Butanol.

Der organische Komplexligand wird entweder während der Katalysatorpräparation zugegeben oder unmittelbar nach der Ausfällung der Doppelmetallcyanidverbindung a). Gewöhnlich wird der organische Komplexligand im Überschuß eingesetzt.

Die erfindungsgemäßen DMC-Katalysatoren enthalten die Doppelmetallcyanid-Verbindungen a) in Mengen von 20 bis 90 Gew.-%, bevorzugt 25 bis 80 Gew.-%, bezogen auf die Menge des fertigen Katalysators, und die organischen Komplexliganden b) in Mengen von 0,5 bis 30 Gew.-%, bevorzugt 1 bis 25 Gew.-%, bezogen auf die Menge des fertigen Katalysators. Die erfindungsgemäßen DMC-Katalysatoren enthalten üblicherweise 1 bis 80 Gew.-%, bevorzugt 1 bis 40 Gew.-%, bezogen auf die Menge des fertigen Katalysators, einer Mischung zweier oder mehrerer komplexbildender Komponenten c).

Für die Herstellung der erfindungsgemäßen Katalysatoren geeignete komplexbildende Komponenten c) sind Polyester und Gallensäuren oder deren Salze, Ester oder Amide.

Bevorzugt eingesetzte Polyester sind Hydroxy-Endgruppen aufweisende lineare und teilverzweigte Polyester mit mittleren Molmassen unterhalb 10000, die in der deutschen Patentanmeldung 197 45 120.9 genauer beschrieben sind. Besonders bevorzugt eingesetzt werden Polyester mit mittleren Molmassen von 400 bis 6000 und OH-Zahlen von 28 bis 300 mg KOH/g, die für die Herstellung von Polyurethanen geeignet sind. Geeignete Polyester sind z.B. Poly(ethylenglykol-adipat), Poly(diethylenglykol-adipat), Poly(dipropylenglykol-adipat), mit Trimethylolpropan verzweigtes Poly(diethylenglykol-adipat) oder Poly(tetramethylenglykol-adipat).

Geeignete Gallensäuren für Komponente c) sind C₂₄-Steroid-Carbonsäuren, die Abbauprodukte des Cholesterins sind, und die sich im allgemeinen von der 5β-Cholan-24-säure durch Einführung α-ständiger Hydroxy-Gruppen an C-3, C-6, C-7 und C-12 ableiten.

Bevorzugte Gallensäuren besitzen die allgemeine Formel 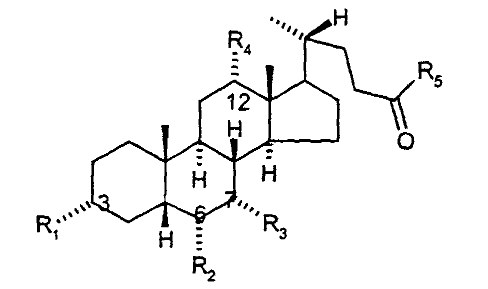 wobei R₁, R₂, R₃ und R₄ unabhängig voneinander H oder OH und R₅ OH, NH-CH₂-COOH, NH-CH₂-CH₂-SO₃H, NH-(CH₂)₃-N⁺(CH₃)₂-CH₂-CHOH-CH₂-SO₃⁻ oder NH-(CH₂)₃-N⁺(CH₃)₂-(CH₂)₃-SO₃⁻ bedeuten.

Geeignet sind die freien Säuren oder deren Salze, bevorzugt Alkali- oder Erdalkalimetallsalze, sowie deren Ester, bevorzugt mit Alkylresten mit 1 bis 30 C-Atomen, und deren Amide, bevorzugt mit Alkylresten oder Sulfoalkyl-, Sulfoalkylaminoalkyl-, Sulfohydroxyalkylaminoalkyl- und Carboxyalkylresten in der Säure- oder Salzform.

Beispiele geeigneter Gallensäuren oder deren Salze, Ester oder Amide sind Cholsäure (3α,7α,12α-Trihydroxy-5β-cholan-24-säure; R₁ = R₃ = R₄ = R₅ = OH, R₂ = H), Cholsäurenatriumsalz (Natriumcholat), Lithiumcholat, Kaliumcholat, Glykolcholsäure (3α,7α,12α-Trihydroxy-5β-cholan-24-säure-N-[carboxymethyl]amid; R₁ = R₃ = R₄ = OH, R₂ = H, R₅ = NH-CH₂-COOH), Natriumglykocholat, Taurocholsäure (3α,7α,12α-Trihydroxy-5β-cholan-24-säure-N-[2-sulfoethyl]amid; R₁ = R₃ = R₄ = OH, R₂ = H, R₅ = NH-CH₂-CH₂-SO₃H), Natriumtaurocholat, Desoxycholsäure (3α,12α-Dihydroxy-5β-cholan-24-säure; R₁ = R₄ = R₅ = OH, R₂ = R₃ = H), Natriumdesoxycholat, Kaliumdesoxycholat, Lithiumdesoxycholat, Glykodesoxycholsäure (3α,12α-Dihydroxy-5β-cholan-24-säure-N-[carboxymethyl]-amid; R₁ = R₄ = OH, R₂ = R₃ = H, R₅ = NH-CH₂-COOH), Natriumglykodesoxycholat, Taurodesoxycholsäure (3α,12α-Dihydroxy-5β-cholan-24-säure-N-[2-sulfoethyl]amid; R₁ = R₄ = OH, R₂ = R₃ = H, R₅ = NH-CH₂-CH₂-SO₃H), Natriumtaurodesoxycholat, Chenodesoxycholsäure (3α,7α-Dihydroxy-5β-cholan-24-säure; R₁ = R₃ = R₅ = OH, R₂ = R₄ = H), Natriumchenodesoxycholat, Glykochenodesoxycholsäure (3α,7α-Dihydroxy-5β-cholan-24-säure-N-[carboxymethyl]amid; R₁ = R₃ = OH, R₂ = R₄ = H, R₅ = NH-CH₂-COOH), Natriumglykochenodesoxycholat, Taurochenodesoxycholsäure (3α,7α-Dihydroxy-5β-cholan-24-säure-N-[2-sulfoethyl]amid; R₁ = R₃ = OH, R₂ = R₄ = H, R₅ = NH-CH₂-CH₂-SO₃H), Natriumtaurochenodesoxycholat, Lithocholsäure (3α-Hydroxy-5β-cholan-24-säure; R₁ = R₅ = OH, R₂ = R₃ = R₄ = H), Natriumlithocholat, Kaliumlithocholat, Hyocholsäure (3α,6α,7α-Trihydroxy-5β-cholan-24-säure; R₁ = R₂ = R₃ = R₅ = OH, R₄ = H), Natriumhyocholat, Lithiumhyocholat, Kaliumhyocholat, Hyodesoxycholsäure (3α,6α-Dihydroxy-5β-cholan-24-säure; R₁ = R₂ = R₅ = OH; R₃ = R₄ = H), Natriumhyodesoxycholat, Lithiumhyodesoxycholat, Kaliumhyodesoxycholat, Cholsäuremethylester, Cholsäureethylester, Desoxycholsäureethylester und Hyocholsäuremethylester.

Besonders bevorzugt eingesetzt werden die Natrium-, Lithium- oder Kaliumsalze oder die Methyl- oder Ethylester der Cholsäure, Glykocholsäure, Taurocholsäure, Desoxycholsäure, Glykodesoxycholsäure, Taurodesoxycholsäure, Chenodesoxycholsäure, Glykochenodesoxycholsäure, Taurochenodesoxycholsäure, Lithocholsäure, Hyocholsäure, Hyodesoxycholsäure oder deren Gemische.

Weiter geeignet sind Gallensäuren wie Ursocholsäure (3α, 7β, 12α-Trihydroxy-5β-cholan-24-säure), Ursodesoxycholsäure (3α,7β-Dihydroxy-5β-cholan-24-säure), 7-Oxolithocholsäure (3α-Hydroxy-7-oxo-5β-cholan-24-säure), Lithocholsäure-3-sulfat (3α-Hydroxy-5β-cholan-24-säure-3-sulfat), nor-Cholsäure und bisnor-Cholsäure, oder deren Salze, Ester oder Amide.

Die Gallensäuren und deren Salze, Ester oder Amide sind allgemein gut bekannt und z.B. ausführlich beschrieben in Nachr. Chem. Tech. Lab. 43 (1995) 1047, Setchell et al.: "The Bile Acids", Bd. 4, Plenum, New York 1998 und "Römpp, Lexikon Naturstoffe", Stuttgart, New York 1997, S. 248ff.

Die Analyse der Katalysatorzusammensetzung erfolgt üblicherweise mittels Elementaranalyse, Thermogravimetrie oder extraktiver Entfernung der komplexbildenden Komponenten mit anschliessender gravimetrischer Bestimmung.

Die erfindungsgemäßen Katalysatoren können kristallin, teilkristallin oder amorph sein. Die Analyse der Kristallinität erfolgt üblicherweise durch Pulverröntgendiffraktometrie.

Bevorzugt sind besonders erfindungsgemäße Katalysatoren enthaltend
a) Zinkhexacyanocobaltat (III),
b) tert.-Butanol und
c) einen oder mehrere Polyester und eine oder mehrere Gallensäuren oder deren Salze, Ester oder Amide.

Die Herstellung der erfindungsgemäßen DMC-Katalysatoren erfolgt üblicherweise in wässriger Lösung durch Umsetzung von Metallsalzen, insbesondere der Formel (I), mit Metallcyanidsalzen, insbesondere der Formel (II), in Gegenwart von organischen Komplexliganden b), die weder Polyester nach, Gallensäuren oder deren Salze, Ester oder Amide, sind und zwei oder mehreren komplexbildenden Komponenten c).

Bevorzugt werden dabei zunächst die wässrigen Lösungen des Metallsalzes (z.B. Zinkchlorid, eingesetzt im stöchiometrischen Überschuss (mindestens 50 Mol-% bezogen auf das Metallcyanidsalz)) und des Metallcyanidsalzes (z.B. Kaliumhexacyanocobaltat) in Gegenwart des organischen Komplexliganden b) (z.B. tert.-Butanol) umgesetzt, wobei sich eine Suspension bildet, die die Doppelmetallcyanid-Verbindung a) (z.B. Zinkhexacyanocobaltat), Wasser d), überschüssiges Metallsalz e), und den organischen Komplexliganden b) enthält.

Der organische Komplexligand b) kann dabei in der wässrigen Lösung des MetaUsalzes und/oder des Metallcyanidsalzes vorhanden sein, oder er wird der nach Ausfällung der Doppelmetallcyanid-Verbindung a) erhaltenen Suspension unmittelbar zugegeben. Es hat sich als vorteilhaft erwiesen, die wässrigen Lösungen und den organischen Komplexliganden b) unter starkem Rühren zu vermischen. Die gebildete Suspension wird üblicherweise anschließend mit einer Mischung aus zwei oder mehreren komplexbildenden Komponenten c) behandelt. Die Mischung aus zwei oder mehreren komplexbildenden Komponenten c) wird dabei bevorzugt in einer Mischung mit Wasser und organischem Komplexliganden b) eingesetzt.

Anschließend erfolgt die Isolierung des Katalysators aus der Suspension durch bekannte Techniken, wie Zentrifugation oder Filtration. In einer bevorzugten Ausführungsvariante wird der isolierte Katalysator anschließend mit einer wässrigen Lösung des organischen Komplexliganden b) gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden.

Bevorzugt liegt die Menge des organischen Komplexliganden b) in der wässrigen Waschlösung zwischen 40 und 80 Gew.-%, bezogen auf die Gesamtlösung. Weiterhin ist es vorteilhaft, der wässrigen Waschlösung eine kleine Menge der Mischung aus zwei oder mehreren komplexbildenden Komponenten c) zuzufügen, bevorzugt 0,5 bis 5 Gew.-%, bezogen auf die Gesamtlösung.

Außerdem ist es vorteilhaft, den Katalysator mehr als einmal zu waschen. Hierzu kann z.B. der erste Waschvorgang wiederholt werden. Bevorzugt ist es aber, für weitere Waschvorgänge nichtwässrige Lösungen zu verwenden, z.B. eine Mischung aus organischem Komplexliganden und der Mischung aus zwei oder mehreren komplexbildenden Komponenten c).

Der gewaschene Katalysator wird anschließend, gegebenenfalls nach Pulverisierung, bei Temperaturen von im allgemeinen 20 - 100°C und bei Drücken von im allgemeinen 0,1 mbar bis Normaldruck (1013 mbar) getrocknet.

Ein weiterer Gegenstand der vorliegenden Erfindung ist die Verwendung der erfindungsgemäßen DMC-Katalysatoren in einem Verfahren zur Herstellung von Polyetherpolyolen durch Polyaddition von Alkylenoxiden an aktive Wasserstoffatome aufweisende Starterverbindungen.

Als Alkylenoxide kommen bevorzugt Ethylenoxid, Propylenoxid, Butylenoxid sowie deren Mischungen zum Einsatz. Der Aufbau der Polyetherketten durch Alkoxylierung kann z.B. nur mit einem monomeren Epoxid durchgeführt werden oder auch statistisch oder blockweise mit 2 oder 3 unterschiedlichen monomeren Epoxiden erfolgen. Näheres ist "Ullmanns Encyclopädie der industriellen Chemie", Band A21, 1992, S. 670f zu entnehmen.

Als aktive Wasserstoffatome aufweisende Starterverbindungen werden vorzugsweise Verbindungen mit (zahlenmittleren) Molekulargewichten von 18 bis 2 000 und 1 bis 8 Hydroxylgruppen eingesetzt. Beispielsweise werden genannt: Ethylenglykol, Diethylenglykol, Triethylenglykol, 1,2-Propylenglykol, 1,4-Butandiol, Hexamethylenglykol, Bisphenol A, Trimethylolpropan, Glycerin, Pentaerythrit, Sorbit, Rohrzucker, abgebaute Stärke oder Wasser.

Vorteilhafterweise werden solche aktive Wasserstoffatome aufweisende Starterverbindungen eingesetzt, die z.B. durch konventionelle Alkalikatalyse aus den zuvor genannten niedermolekularen Startern hergestellt wurden und oligomere Alkoxylierungsprodukte darstellen mit (zahlenmittleren) Molekulargewichten von 200 bis 2000.

Die durch die erfindungsgemäßen Katalysatoren katalysierte Polyaddition von Alkylenoxiden an aktive Wasserstoffatome aufweisende Starterverbindungen erfolgt im allgemeinen bei Temperaturen von 20 bis 200°C, bevorzugt im Bereich von 40 bis 180°C, besonders bevorzugt bei Temperaturen von 50 bis 150°C. Die Reaktion kann bei Gesamtdrücken von 0,0001 bis 20 bar durchgeführt werden. Die Polyaddition kann in Substanz oder einem inerten, organischen Lösungsmittel, wie Toluol und/oder THF, durchgeführt werden. Die Menge an Lösungsmittel beträgt üblicherweise 10 bis 30 Gew.-%, bezogen auf die Menge des herzustellenden Polyetherpolyols.

Die Katalysatorkonzentration wird so gewählt, dass unter den gegebenen Reaktionsbedingungen eine gute Beherrschung der Polyadditionsreaktion möglich ist. Die Katalysatorkonzentration liegt im allgemeinen im Bereich von 0,0005 Gew.-% bis 1 Gew.-%, bevorzugt im Bereich von 0,001 Gew.-% bis 0,1 Gew.-%, besonders bevorzugt im Bereich von 0,001 bis 0,0025 Gew.-%, bezogen auf die Menge des herzustellenden Polyetherpolyols.

Die (zahlenmittleren) Molekulargewichte der nach dem erfindungsgemäßen Verfahren hergestellten Polyetherpolyole liegen im Bereich von 500 bis 100.000 g/mol, bevorzugt im Bereich von 1 000 bis 50 000 g/mol, besonders bevorzugt im Bereich von 2 000 bis 20 000 g/mol.

Die Polyaddition kann kontinuierlich oder diskontinuierlich, z.B. in einem Batchoder im Semibatchverfahren durchgeführt werden.

Die erfindungsgemäßen Katalysatoren können wegen ihrer deutlich erhöhten Aktivität in sehr niedrigen Konzentrationen eingesetzt werden (25 ppm und weniger, bezogen auf die Menge des herzustellenden Polyetherpolyols). Werden die in Gegenwart der erfindungsgemäßen Katalysatoren hergestellten Polyetherpolyole zur Herstellung von Polyurethanen verwendet (Kunststoffhandbuch, Bd. 7, Polyurethane, 3. Aufl. 1993, S. 25-32 und 57-67), kann auf eine Entfernung des Katalysators aus dem Polyetherpolyol verzichtet werden, ohne dass die Produktqualitäten des erhaltenen Polyurethans nachteilig beeinflusst werden.

### Beispiele

### Katalysatorpräparation

### Beispiel A

Herstellung eines DMC-Katalysators mit Glycerintricapronat und 2-Phosphonopropionsäuretriethylester (Katalysator A).

Zu einer Lösung aus 4 g (12 mmol) Kaliumhexacyanocobaltat in 70 ml destilliertem Wasser gibt man unter starkem Rühren (24 000 U/min) eine Lösung aus 12,5 g (91,5 mmol) Zinkchlorid in 20 ml destilliertem Wasser. Unmittelbar danach wird eine Mischung aus 50 g tert.-Butanol und 50 g destilliertem Wasser zur gebildeten Suspension gegeben und anschließend 10 min stark gerührt (24 000 U/min). Dann wird eine Mischung aus 0,5 g Glycerintricapronat und 0,5 g 2-Phosphonopropionsäuretriethylester, 1 g tert.-Butanol und 100 g destilliertem Wasser zugegeben und 3 min gerührt (1 000 U/min). Der Feststoff wird durch eine Filtration isoliert, dann 10 min mit einer Mischung aus 70 g tert.-Butanol, 30 g destilliertem Wasser, 0,5 g Glycerintricapronat und 0,5 g 2-Phosphonopropionsäuretriethylester gerührt (10 000 U/min) und erneut filtriert. Abschließend wird noch einmal 10 min mit einer Mischung aus 100 g tert.-Butanol, 0,5 g Glycerintricapronat und 0,5 g 2-Phosphonopropionsäuretriethylester gerührt (10 000 U/min). Nach Filtration wird der Katalysator bei 50°C und Normaldruck bis zur Gewichtskonstanz getrocknet.

### Ausbeute an getrocknetem, pulverförmigem Katalysator. 5,8 g

Elementaranalyse, Thermogravimetrische Analyse und Extraktion:
Cobalt = 9,8 Gew.-%, Zink = 23,2 Gew.-%, tert.-Butanol = 3,0 Gew.-%, Glycerintricapronat = 11,4 Gew.-%, 2-Phosphonopropionsäuretriethylester =16,9 Gew.-%

### Beispiel B

### Herstellung eines DMC-Katalysators mit einem Polypropylenglykoldiglycidylether und 2-Phosphonopropionsäuretriethylester (Katalysator B)

Es wurde verfahren wie in Beispiel A, jedoch wurde ein Polypropylenglykoldiglycidylether mit mittlerer Molmasse 640 und 2-Phosphonopropionsäuretriethylester anstelle von Glycerintricapronat und 2-Phosphonopropionsäuretriethylester eingesetzt.

Ausbeute an getrocknetem, pulverförmigem Katalysator: 6,8 g

Elementaranalyse, Thermogravimetrische Analyse und Extraktion:
Cobalt = 10,3 Gew.-%, Zink = 23,4 Gew.-%, tert.-Butanol = 1,3 Gew.-%, Polypropylenglykoldiglycidylether = 20,5 Gew.-%, 2-Phosphonopropionsäuretriethylester = 8,5 Gew.-%.

### Beispiel C

### Herstellung eines DMC-Katalysators mit einem Polyester und Cholsäure Natriumsalz (Katalysator C).

Es wurde verfahren wie in Beispiel A, jedoch wurde ein durch Trimethylolpropan schwach verzweigter Polyester aus Adipinsäure und Diethylenglykol, mit mittlerer Molmasse 2300 (OH-Zahl = 50 mg KOH/g) und Cholsäure Natriumsalz anstelle von Glycerintricapronat und 2-Phosphonopropionsäuretriethylester eingesetzt.

Ausbeute an getrocknetem, pulverförmigem Katalysator 4,8 g
Elementaranalyse, Thermogravimetrische Analyse und Extraktion:
Cobalt = 12,7 Gew.-%, Zn = 25,2 Gew.-%, tert.-Butanol = 4,2 Gew.-%, Polyester = 12,8 Gew.-%, Cholsäure Natriumsalz = 3,7 Gew.-%.

### Beispiel D ( Vergleich)

### Herstellung eines DMC-Katalysators mit Glycerintricapronat ohne 2-Phosphonopropionsäuretriethylester (Katalysator D)

Zu einer Lösung aus 4 g (12 mmol) Kaliumhexacyanocobaltat in 75 ml destilliertem Wasser gibt man unter starkem Rühren (24 000 U/min) eine Lösung aus 12,5 g (91,5 mmol) Zinkchlorid in 20 ml destilliertem Wasser. Unmittelbar danach wird eine Mischung aus 50 g tert.-Butanol und 50 g destilliertem Wasser zur gebildeten Suspension gegeben und anschließend 10 min stark gerührt (24 000 U/min). Dann wird eine Mischung aus 1 g eines Glycerintricapronats (Firma Aldrich), 1 g tert.-Butanol und 100 g destilliertem Wasser zugegeben und 3 min gerührt (10 000 U/min). Der Feststoff wird durch eine Filtration isoliert, dann 10 min mit einer Mischung aus 70 g tert.-Butanol, 30 g destilliertem Wasser und 1 g des obigen Glycerintricapronats gerührt und erneut filtriert. Abschließend wird noch einmal 10 min mit einer Mischung aus 100 g tert.-Butanol und 0,5 g des obigen Glycerintricapronats gerührt (10 000 U/min). Nach Filtration wird der Katalysator bei 50°C und Normaldruck bis zur Gewichtskonstanz getrocknet.

### Ausbeute an getrocknetem, pulverförmigem Katalysator 5,3 g

Elementaranalyse, Thermogravimetrische Analyse und Extraktion:
Cobalt = 12,3 Gew.-%, Zink = 27,0 Gew.-%, tert.-Butanol = 7,2 Gew.-%, Glycerintricapronat = 3,7 Gew.-%.

### Beispiel E (Vergleich)

### Herstellung eines DMC-Katalysators mit 2-Phosphonopropionsäuretriethylester ohne Glycerintricapronat (Katalysator E)

Es wurde verfahren wie in Beispiel D (Vergleich), jedoch wurde 2-Phosphonopropionsäuretriethylester (Firma Fluka) anstelle des Glycerintricapronats aus Beispiel D eingesetzt.

Ausbeute an getrocknetem, pulverförmigem Katalysator: 5,9 g

Elementaranalyse, Thermogravimetrische Analyse und Extraktion:
Cobalt = 10,2 Gew.-%, Zink = 23,5 Gew.-%, tert.-Butanol = 2,3 Gew.-%, 2-Phosphonopropionsäuretriethylester = 26,1 Gew.-%.

### Beispiel F ( Vergleich)

### Herstellung eines DMC-Katalysators mit Polypropylenglykoldiglycidylether ohne 2-Phosphonopropionsäuretriethylester (Katalysator F)

Es wurde verfahren wie in Beispiel D (Vergleich), jedoch wurde Polypropylenglykoldiglycidylether mit mittlerer Molmasse 640 (Firma Aldrich) anstelle des Glycerintricapronats aus Beispiel D eingesetzt.

Ausbeute an getrocknetem, pulverförmigem Katalysator: 6,0 g

Elementaranalyse, Thermogravimetrische Analyse und Extraktion:
Cobalt = 8,7 Gew.-%, Zink = 20,2 Gew.-%, tert.-Butanol = 4,2 Gew.-%, Polypropylenglykoldiglycidylether-Ligand = 30,5 %.

### Beispiel G (Vergleich)

### Herstellung eines DMC-Katalysators mit einem Polyester ohne Cholsäure Natriumsalz (Katalysator G)

Es wurde verfahren wie in Beispiel D (Vergleich), jedoch wurde ein durch Trimethylolpropan schwach verzweigter Polyester aus Adipinsäure und Diethylenglykol mit mittlerer Molmasse 2300 (OH-Zahl = 50 mg KOH/g) anstelle des Glycerintricapronats aus Beispiel D eingesetzt.

Ausbeute an getrocknetem, pulverförmigem Katalysator: 3,9 g

Elementaranalyse und Thermogravimetrische Analyse:
Cobalt = 12,2 Gew.-%, Zink = 25,7 Gew.-%, tert.- Butanol = 7,1 Gew.-%, Polyester = 12,3 Gew.-%.

### Beispiel H (Vergleich)

### Herstellung eines DMC-Katalysators mit Cholsäure Natriumsalz ohne Polyester (Katalysator H)

Es wurde verfahren wie in Beispiel D (Vergleich), jedoch wurde Cholsäure Natriumsalz anstelle des Glycerintricapronats aus Beispiel D eingesetzt.

Ausbeute an getrocknetem, pulverförmigem Katalysator: 4,2 g

Elementaranalyse, Thermogravimetrische Analyse und Extraktion:
Cobalt = 12,6 Gew.-%, Zink = 27,3 Gew.-%, tert.-Butanol = 10,9 Gew.-%, Cholsäure Natriumsalz = 4,3 Gew.-%

### Herstellung von Polvetherpolvolen

### Allgemeine Durchführung

In einem 500 ml Druckreaktor werden 50 g Polypropylenglykol-Starter (zahlenmittleres Molekulargewicht = 1 000 g/mol) und 5 mg Katalysator (25 ppm, bezogen auf die Menge des herzustellenden Polyetherpolyols) unter Schutzgas (Argon) vorgelegt und unter Rühren auf 105°C aufgeheizt. Anschließend wird Propylenoxid (ca. 5 g) auf einmal zudosiert, bis der Gesamtdruck auf 2,5 bar angestiegen ist. Weiteres Propylenoxid wird erst dann wieder zudosiert, wenn ein beschleunigter Druckabfall im Reaktor beobachtet wird. Dieser beschleunigte Druckabfall zeigt an, dass der Katalysator aktiviert ist. Anschließend wird das restliche Propylenoxid (145 g) kontinuierlich bei einem konstanten Gesamtdruck von 2,5 bar zudosiert. Nach vollständiger Propylenoxid-Dosierung und 2 Stunden Nachreaktionszeit bei 105°C werden flüchtige Anteile bei 90°C (1 mbar) abdestilliert und anschließend auf Raumtemperatur abgekühlt.

Die erhaltenen Polyetherpolyole wurden durch Ermittlung der OH-Zahlen, der Doppelbindungsgehalte und der Viskositäten charakterisiert.

Der Reaktionsverlauf wurde anhand von Zeit-Umsatz-Kurven (Propylenoxid-Verbrauch [g] vs. Reaktionszeit [min]) verfolgt. Aus dem Schnittpunkt der Tangente an den steilsten Punkt der Zeit-Umsatz-Kurve mit der verlängerten Basislinie der Kurve wurde die Induktionszeit bestimmt. Die für die Katalysatoraktivität maßgeblichen Propoxylierungszeiten entsprechen dem Zeitraum zwischen Katalysatoraktivierung (Ende der Induktionsperiode) und dem Ende der Propylenoxid-Dosierung. Die Gesamtreaktionszeit ist die Summe aus Induktions- und Propoxylierungszeit.

### Beispiel 1

| Herstellung von Polyetherpolyol mit Katalysator A (25 ppm) | | |
|---|---|---|
| Induktionszeit | | 100 min |
| Propoxylierungszeit | | 40 min |
| Gesamtreaktionszeit | | 140 min |
| Polyetherpolyol | OH-Zahl (mg KOH/g) | 29,4 |
| | Doppelbindungsgehalt (mMol/kg) | 9 |
| | Viskosität 25°C (mPas) | 845 |

### Beispiel 2

| Herstellung von Polyetherpolyol mit Katalysator B (25 ppm) | | |
|---|---|---|
| Induktionszeit | | 140 min |
| Propoxylierungszeit | | 37 min |
| Gesamtreaktionszeit | | 177 min |
| Polyetherpolyol | OH-Zahl ( mg KOH/g) | 30,0 |
| | Doppelbindungsgehalt (mMol/kg) | 7 |
| | Viskosität 25°C (mPas) | 821 |

### Beispiel 3

| Herstellung von Polyetherpolyol mit Katalysator C (25 ppm) | | |
|---|---|---|
| Induktionszeit | | 80 min |
| Propoxylierungszeit | | 27 min |
| Gesamtreaktionszeit | | 107 min |
| Polyetherpolyol | OH-Zahl (mg KOH/g) | 30,1 |
| | Doppelbindungsgehalt (mMol/kg) | 7 |
| | Viskosität 25°C (mPas) | 863 |

Ohne Entfernung des Katalysators beträgt der Metallgehalt im Polyol: Zn = 5 ppm, Co = 2 ppm.

### Beispiel 4 (Vergleich)

| Herstellung von Polyetherpolyol mit Katalysator D (25 ppm) | | |
|---|---|---|
| Induktionszeit | | 166 min |
| Propoxylierungszeit | | 291 min |
| Gesamtreaktionszeit | | 457 min |
| Polyetherpolyol | OH-Zahl (mg KOH/g) | 30,9 |
| | Doppelbindungsgehalt (mMol/kg) | 8 |
| | Viskosität 25°C (mPas) | 874 |

### Beispiel 5 (Vergleich)

| Herstellung von Polyetherpolyol mit Katalysator E (25 ppm) | | |
|---|---|---|
| Induktionszeit | | 99 min |
| Propoxylierungszeit | | 110 min |
| Gesamtreaktionszeit | | 209 min |
| Polyetherpolyol | OH-Zahl (mg KOH/g) | 29,9 |
| | Doppelbindungsgehalt (mMol/kg) | 10 |
| | Viskosität 25°C (mPas) | 862 |

### Beispiel 6 (Vergleich)

| Herstellung von Polyetherpolyol mit Katalysator F (25 ppm) | | |
|---|---|---|
| Induktionszeit | | 154 min |
| Propoxylierungszeit | | 37 min |
| Gesamtreaktionszeit | | 191 min |
| Polyetherpolyol | OH-Zahl (mg KOH/g) | 30,7 |
| | Doppelbindungsgehalt (mMol/kg) | 7 |
| | Viskosität 25°C (mPas) | 809 |

### Beispiel 7 (Vergleich)

| Herstellung von Polyetherpolyol mit Katalysator G (25 ppm) | | |
|---|---|---|
| Induktionszeit | | 130 min |
| Propoxylierungszeit | | 150 min |
| Gesamtreaktionszeit | | 280 min |
| Polyetherpolyol | OH-Zahl (mg KOH/g) | 29,5 |
| | Doppelbindungsgehalt (mMol/kg) | 5 |
| | Viskosität 25°C (mPas) | 861 |

### Beispiel 8 (Vergleich)

| Herstellung von Polyetherpolyol mit Katalysator H (25 ppm) | | |
|---|---|---|
| Induktionszeit | | 217 min |
| Propoxylierungszeit | | 33 min |
| Gesamtreaktionszeit | | 250 min |
| Polyetherpolyol | OH-Zahl (mg KOH/g) | 29,6 |
| | Doppelbindungsgehalt (mMol/kg) | 6 |
| | Viskosität 25°C (mPas) | 855 |

Katalysatoren A-C, die neben tert.-Butanol zwei komplexbildende Komponenten enthalten, zeigen unter den oben beschriebenen Reaktionsbedingungen eine höhere Aktivität als Katalysatoren D-H, die neben tert.-Butanol nur einen Komplexliganden enthalten.

So zeigt Katalysator A, der sowohl Glycerintricapronat als auch 2-Phosphonopropionsäuretriethylester als komplexbildende Komponenten enthält, eine wesentlich höhere Aktivität als die Katalysatoren D oder E, die Glycerintricapronat bzw. 2-Phosphonopropionsäuretriethylester als komplexbildende Komponente enthalten, insbesondere bezüglich Propoxylierungszeit.

Beispiele 1-3 zeigen, dass die neuen, erfindungsgemäßen DMC-Katalysatoren aufgrund ihrer deutlich erhöhten Aktivität bei der Polyetherpolyol-Herstellung in so geringen Konzentrationen eingesetzt werden können, dass auf eine Abtrennung des Katalysators aus dem Polyol verzichtet werden kann.

## Patentansprüche

1. Doppelmetallcyanid (DMC)-Katalysator enthaltend
a) eine oder mehrere Doppelmetallcyanid-Verbindungen,
b) einen oder mehrere von c) verschiedene, organische Komplexliganden,
c) einen oder mehrere Polyester und eine oder mehrere Gallensäuren oder deren Salze, Ester oder Amide.

2. DMC-Katalysator nach Anspruch 1, zusätzlich enthaltend d) Wasser und/oder e) wasserlösliches Metallsalz.

3. DMC-Katalysator nach Anspruch 1, worin die Doppelmetallcyanid-Verbindung Zinkhexacyanocobaltat(III) ist.

4. DMC-Katalysator nach einem der Ansprüche 1 bis 3, worin der organische Komplexligand tert.-Butanol ist.

5. Verfahren zur Herstellung von Polyetherpolyolen durch Polyaddition von Alkylenoxiden an aktive Wasserstoffatome aufweisende Starterverbindungen, in Gegenwart eines oder mehrerer DMC-Katalysatoren nach einem der Ansprüche 1 bis 4.

6. Verwendung eines oder mehrerer DMC-Katalysatoren nach einem der Ansprüche 1 bis 4 zur Herstellung von Polyetherpolyolen durch Polyaddition von Alkylenoxiden an aktive Wasserstoffatome aufweisende Starterverbindungen.

## Claims

1. Double metal cyanide (DMC) catalyst containing
a) one or more double metal cyanide compounds,
b) one or more organic complex ligands other than c) and
c) one or more polyesters and one or more bile acids or the salts, esters or amides thereof.

2. DMC catalyst according to claim 1 additionally containing d) water and/or e) water-soluble metal salt.

3. DMC catalyst according to claim 1, in which the double metal cyanide compound is zinc hexacyanocobaltate (III).

4. DMC catalyst according to one of claims 1 to 3, in which the organic complex ligand is tert.-butanol.

5. Process for the production of polyether polyols by polyaddition of alkylene oxides onto starter compounds comprising active hydrogen atoms in the presence of one or more DMC catalysts according to one of claims 1 to 4.

6. Use of one or more DMC catalysts according to one of claims 1 to 4 for the production of polyether polyols by polyaddition of alkylene oxides onto starter compounds comprising active hydrogen atoms.

## Revendications

1. Catalyseur du type cyanure métallique double (CMD) contenant :
a) un ou plusieurs cyanures métalliques doubles,
b) un ou plusieurs ligands de complexes organiques autres que c)
c) un ou plusieurs polyesters et un ou plusieurs acides biliaires ou leurs sels, esters ou amides.

2. Catalyseur du type CMD selon la revendication 1 contenant en outre d) de l'eau et/ou e) un sel métallique soluble dans l'eau.

3. Catalyseur du type CMD selon la revendication 1, dans lequel le cyanure métallique double est l'hexacyanocobaltate(III) de zinc.

4. Catalyseur du type CMD selon l'une des revendications 1 à 3, dans lequel le ligand de complexe organique est le tert-butanol.

5. Procédé pour la préparation de polyéther-polyols par polyaddition d'oxydes d'alkylène sur des composés de départ portant des atomes d'hydrogène actifs en présence d'un ou plusieurs catalyseurs du type CMD selon l'une des revendications 1 à 4.

6. Utilisation d'un ou plusieurs catalyseurs du type CMD selon l'une des revendications 1 à 4 pour la préparation de polyéther-polyols par polyaddition d'oxydes d'alkylène sur des composés de départ portant des atomes d'hydrogène actifs.
